Europäisches Patentamt

European Patent Office

Office européen des brevets

(19)

(11) **EP 0 645 897 B1**

(12) **EUROPÄISCHE PATENTSCHRIFT**

(45) Veröffentlichungstag und Bekanntmachung des Hinweises auf die Patenterteilung:
**21.07.1999 Patentblatt 1999/29**

(51) Int Cl.⁶: **H04B 3/02**, H04M 3/00

(21) Anmeldenummer: **94114866.0**

(22) Anmeldetag: **21.09.1994**

(54) **Impedanztransparente Schnittstellenschaltung**

Interface circuit with transparent impedance

Circuit d'interface à transparence d'impédance

(84) Benannte Vertragsstaaten:
**BE CH ES GB IT LI NL PT**

(30) Priorität: **28.09.1993 DE 4333005**

(43) Veröffentlichungstag der Anmeldung:
**29.03.1995 Patentblatt 1995/13**

(73) Patentinhaber: **SIEMENS AKTIENGESELLSCHAFT**
**80333 München (DE)**

(72) Erfinder:
• **Höllrigl, Franz, Ing.**
  **A-3931 Walterschlag (AT)**
• **Naiwirt, Erich, Ing.**
  **A-1210 Wien (AT)**

(56) Entgegenhaltungen:
**WO-A-92/20151        DE-A- 2 620 974**

EP 0 645 897 B1

**Beschreibung**

Die Erfindung betrifft eine impedanztransparente Schnittstellenschaltung nach dem Oberbegriff des Anspruches 1, insbesondere eine solche für Telekommunikationsanlagen. Solche Schnittstellenschaltungen sind aus der WO 92/20151 prinzipiell bekannt. Die WO 92/20151 beschreibt eine Schnittstellenschaltung mit zwei Anschlüssen, die jeweils von dem Ausgang einer Strom- oder Spannungsquelle gebildet werden. Diese Strom- oder Spannungsquellen sind abhängig vom Strom oder der Spannung an dem jeweils anderen Schnittstellenanschluß oder in Abhängigkeit von den Differenzen der Ströme oder Spannungen beider Anschlüsse derart geregelt, daß die Ströme und Spannungen an beiden Anschlüssen gleich groß sind oder in vorgegebenem Verhältnis zueinander stehen. Hierzu werden zahlreiche Realisierungsbeispiele angegeben, die jedoch alle zu Regelschwingungen neigen. Aufgrund hochohmig abgeschlossener Stromquellen bzw. niederohmig abgeschlossener Spannungsquellen ergibt sich eine hohe Steilheit bei der Messung der jeweils dualen Größe, was zu einer hohen Schleifenverstärkung führt. Die Koppelung mehrerer Verstärkerstufen führt leicht dazu, daß auch die für eine Schwingung erforderliche Phasenbedingung erfüllt wird. Die dadurch erforderlichen stabilisierenden Maßnahmen, wie z.B. Einbau von Längs- und Querimpedanzen sowie Reduktion der Schleifenverstärkung sind mit Aufwand verbunden und führen darüber hinaus zu einer Verschlechterung übertragungstechnischer Kennwerte wie der Durchgangsdämpfung und der Fehlerdämpfung.

Die vorliegende Erfindung soll eine solche Schnittstellenanordnung mit geringerer Schwingneigung bereitstellen.

Dieses Problem löst die Erfindung durch eine Schnittstellenschaltung mit den Merkmalen des Patentanspruches 1. Günstig ausgestaltete solche Schnittstellenschaltungen haben bedarfsweise die Merkmale der Unteransprüche.

Eine solche Schnittstellenanordnung dient innerhalb einer Zweidrahtübertragungsstrecke zum Durchführen einer oder mehrerer der folgenden Umsetzungen:

1. Symmetrisch auf unsymmetrisch und umgekehrt
2. Gleichstromabriegelung
3. Potentialtrennung in Form einer galvanischen Trennung oder einer "quasigalvanischen Trennung" über hochohmige Widerstände und/oder Kondensatoren
4. Pegeltransformation
5. Impedanztransformation.

Mit Hilfe einer erfindungsgemäßen Schnittstellenanordnung können diese Umsetzungen im Sprachbandbereich ohne die Nachteile einer passiven Schnittstellenanordnung, wie z.B. teure, schwere induktive Übertrager sowie ein vorgegebenes Verhältnis zwischen Pegel- und Impedanztransformation und auch ohne die Nachteile einer Gabelschaltungsstruktur, wie z.B. eine länderspezifische Abhängigkeit von Leitungen und Anschlüssen durchgeführt werden, wobei bei entsprechender Dimensionierung keine Stabilitätsprobleme auftreten.

Typische Anwendungsfälle für erfindungsgemäße Schnittstellenschaltungen im Sprachbandbereich sind Teilnehmerschaltungen sowie Amtsleitungsankopplungen in Vermittlungssystemen.

Nachstehend wird die Erfindung unter Bezugnahme auf die Figur der Zeichnung näher erläutert. Hierbei haben die in den Figuren angegebenen Bezugszeichen folgende Bedeutung:

| | |
|---|---|
| IF | Schnittstellenanordnung |
| AS1, AS2 | Schnittstellenanschluß |
| AS21, AS22 | Schnittstellenteilanschluß |
| SE1, SE2 | Schaltungseinrichtung |
| I1', I2' | Strom des Schnittstellenanschlusses |
| U1, U2 | Spannung am Schnittstellenanschluß |
| Z1, Z2 | Meßimpedanz |
| Z21, Z22 | Teil-Meßimpedanz |
| E11, E12, E21, E22 | Steuereingang einer Schaltungseinrichtung bzw. Analogrechnerschaltung |
| E211, E222 | nichtinvertierender Eingang einer Analogrechnerschaltung |
| E212, E221 | invertierender Eingang einer Analogrechnerschaltung |
| A1, A2 | Ausgang einer Schaltungseinrichtung |
| A11 | Ausgang einer Schaltungseinrichtung für ein nichtinvertiertes Signal |
| A12 | Ausgang einer Schaltungseinrichtung für ein invertiertes Signal |
| UA1, UA2 | Ausgangsspannungssignal einer Schaltungseinrichtung |
| ½·UA1, -½·UA1 | komplementäre Ausgangsspannungssignale einer Schaltungseinrichtung |
| ZA1, ZA2 | anzuschließende Impedanz |

| | |
|---|---|
| AR1, AR2 | Analogrechnerschaltungen |
| I1, I2 | Strom durch Meßimpedanzen |
| L1 | Leitung für nicht invertiertes Signal |
| L2 | Leitung für invertiertes Signal |
| SC | Symmetrierschaltung |
| INV | Invertiererschaltung |
| D1, D2 | Differenzbildungsschaltung |
| I21, I22 | Strom durch Teilimpedanz Z21 bzw. Z22 |

Im einzelnen zeigen:

Figur 1 ein Blockschaltbild der Grundstruktur der Erfindung;

Figur 2 ein Blockschaltbild und eine mögliche , sehr allgemeine Ausgestaltung einer Grundschaltung einer in Figurl verwendeten Schaltungseinrichtung;

Figur 3 als Teil einer Anordnung nach Figur 1 die Grundstruktur eines Schnittstellenanschlusses für symmetrische Signale mit dem Blockschaltbild einer Analogrechnerschaltung mit symmetrischen Eingängen und einer Analogrechnerschaltung mit symmetrischem Ausgang;

Figur 4 eine einfache Ausgestaltungsform einer Analogrechnerschaltung mit symmetrischen Eingängen nach Figur 3.

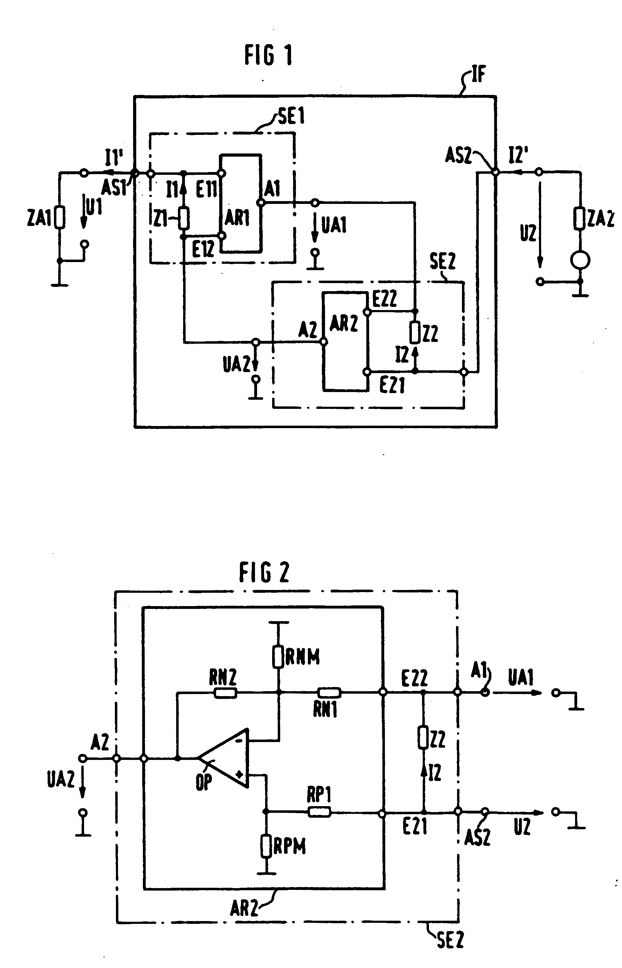

Figur 1 zeigt in einem Blockschaltbild die Grundstruktur einer Schnittstellenanordnung IF nach der Erfindung. Die dargestellte Schnittstellenschaltung IF hat zwei Schnittstellenanschlüsse AS1 und AS2. In dem Schnittstellenanschluß AS1 fließt ein Strom I1'. In der Figur 1 ist eine anzuschließende externe Impedanz ZA1 gegen ein Bezugspotential dargestellt. Am Schnittstellenanschluß AS1 liegt gegenüber diesem Bezugspotentials eine Spannung U1 an. Im Schnittstellenanschluß AS2 fließt der Strom I2' und bezüglich eines Bezugspotentiales liegt die Spannung U2 an, die von einer Spannungsquelle mit der Anschlußimpedanz ZA2 geliefert wird. Da die dargestellte Schnittstellenanordnung IF in beiden Richtungen, also von dem Schnittstellenanschluß AS1 zum Schnittstellenanschluß AS2 und von dem Schnittstellenanschluß AS2 zum Schnittstellenanschluß AS1 transparent sein soll bzw. einen festen Transformationsfaktor bezüglich der Spannung und/oder bezüglich der Impedanz haben soll, sind die Signale I1' und U1 bzw. I2' und U2 im Hinblick auf Ursache und Wirkung wechselseitig ansehbar. Jedem der Schnittstellenanschlüsse AS1 und AS2 ist eine Schaltungseinrichtung SE1 bzw. SE2 zugeordnet. Da diese Schaltungseinrichtungen von ihrer Grundfunktion her gleich sind und sich nur bedingt durch Besonderheiten wie z.B. einen Transformationsfaktor für die Spannung oder für die Impedanz oder aber bedingt durch einen unsymmetrischen bzw. einen symmetrischen Eingang oder durch einen unsymmetrischen bzw. einen symmetrischen Ausgang unterscheiden, wird nachstehend nur eine der Schaltungseinrichtungen SE1 bzw. SE2 erläutert. Eine Schaltungseinrichtung SE2 hat zwei Steuereingänge E21 und E22, die über eine Meßimpedanz Z2 miteinander verbunden sind. Einer der Steuereingänge E21 ist mit dem Schnittstellenanschluß AS2 verbunden und hat eine gegenüber der Meßimpedanz Z2 große Eingangsimpedanz. Die Schaltungseinrichtung SE2 beinhaltet eine Analogrechnerschaltung AR2 mit zwei Eingängen, die mit den Eingängen E21 und E22 der Schaltungseinrichtung SE2 verbunden sind, so daß nachfolgend die Eingänge der Analogrechnerschaltung AR2 ebenfalls mit den Bezugszeichen E21 und E22 benannt werden. Die Analogrechnerschaltung AR2 hat einen Signalausgang A2, an dem ein Ausgangsspannungssignal UA2 bereitgestellt wird. Der nicht unmittelbar mit dem Schnittstellenanschluß AS2 verbundene Eingang E22 der Schaltungseinrichtung SE2 bzw. der Analogrechnerschaltung AR2 ist mit dem Signalausgang A1 der anderen Schaltungseinrichtung SE1 verbunden. Der entsprechende Eingang E12 der anderen Schaltungseinrichtung SE1 ist in analoger Weise mit dem Signalausgang A2 der Schaltungseinrichtung SE2 bzw. der Analogrechnerschaltung AR2 verbunden. Sowohl für die Schaltungseinrichtung SE1 als auch für die Schaltungseinrichtung SE2 gilt, daß die jeweils enthaltene Analogrechnerschaltung AR1 bzw. AR2 an ihrem Ausgang A1 bzw. A2 jeweils ein Spannungssignal UA1 bzw. UA2 bereitstellt, das gleich der Summe aus dem Spannungssignal U1 bzw. U2 an ihrem mit dem entsprechenden Schnittstellenanschluß AS1 bzw. AS2 verbundenen Steuereingang E11 bzw. E21 und der Spannung zwischen den beiden Steuereingängen E11, E12 bzw. E21, E22 - gegebenenfalls jeweils multipliziert mit einem bestimmten Faktor - ist. Für den Fall, daß der Multiplikationsfaktor eins ist (diese Annahme gilt für alle folgenden Ausführungen, soweit nichts gegenteiliges gesagt wird), gilt folglich für das Ausgangssignal UA2 der Analogrechnerschaltung AR2:

$$UA2 = U2 + I2 \cdot Z2$$

Bei gleicher Voraussetzung auf der Gegenseite gilt außerdem

$$UA2 = -U2 - I2 \cdot Z2$$

Die Spannung zwischen den beiden Eingängen E22 und E21 entspricht der Ausgangsspannung UA1 der anderen Schaltungseinrichtung SE1 abzüglich der Spannung U2 an dem Schnittstellenanschluß AS2. Folglich gilt für die Ausgangsspannung UA2 am Ausgang A2 der Analogrechnerschaltung AR2

$$UA2 = 2 \cdot U2 - UA1$$

Wenn die Analogrechnerschaltung AR2 diese Bedingung erfüllt und die Analogrechnerschaltung AR1 eine entsprechende Bedingung bezüglich der an ihr anliegenden Spannungen erfüllt, ist mit einer Schnittstellenschaltung nach Figur1 eine impedanztransparente Schnittstellenschaltung realisiert, falls der Strom durch die Meßimpedanz jeweils gleich dem Strom des damit verbundenen Schnittstellenanschlusses ist. Bezüglich des Schnittstellenanschlusses AS2 ist der Strom I2' dann nahezu gleich dem Strom I2 durch die Impedanz Z2, wenn der Steuereingang E21 der Analogrechnerschaltung AR2 bezüglich der Meßimpedanz Z2 eine hohe Eingangsimpedanz hat. Die Ausgangsimpedanz am Ausgang A1 der Analogrechnerschaltung AR1 sollte klein sein bezüglich der Meßimpedanz Z2 und bezüglich der Eingangsimpedanz des Eingangs E22 der Analogrechnerschaltung AR2, um einen parasitären Spannungsteiler zu vermeiden.

Bei einer Schnittstellenschaltung mit in zuvor beschriebener Weise aufgebauten und zusammengeschalteten Schaltungseinrichtung SE1 und SE2 ist bei Verwendung rein reeller Meßimpedanzen Z1 und Z2 bei passiven Abschlüssen der Schnittstellenschaltung ein Schwingverhalten ausgeschlossen. Bei reeller Impedanz Z2 und reeller Meßimpedanz Z1 kann nämlich der Betrag der Schleifenverstärkung der aus der Schaltungseinrichtung SEI und der Schaltungseinrichtung SE2 gebildeten Schleife nie größer als 1 werden, wenn keine parasitären Verstärkungsüberhöhungen auftreten. Eine Schleifenverstärkung von eins wird hierbei jeweils nur bei Leerlauf oder Kurzschluß erreicht. Da die Einzelverstärkungen der Schnittstellenanordnung bei üblichen Abschlüssen kleiner als eins sind, gilt dies auch für die Schleifenverstärkung der Gesamtanordnung. Somit kann eine erfindungsgemäße Schnittstellenanordnung bei Abschluß mit passiven Impedanzen nicht schwingen. Dies gilt auch noch, wenn zur Realisierung einer Spannungs-Pegeltransformation die Analogrechnerschaltung AR2 in ihrer Übertragungsfunktion einen Faktor k hat, da in diesem Falle die Übertragungsfunktion der Analogrechnerschaltung AR1 eine Multiplikation mit dem Kehrwert des Multiplikationsfaktors der Analogrechnerschaltung AR2 vorsieht. In der Ermittlung der Schleifenverstärkung heben sich diese Fakturen folglich jeweils auf.

Wenn in einer erfindungsgemäßen Schaltung nach Figurl die Meßimpedanz Z1 und Z2 der beiden Schaltungseinrichtungen SE1 und SE2 gleich groß sind, ist die Schnittstellenanordnung IF impedanztransparent. Zur Realisierung einer Impedanztransformation kann der Wert der Meßimpedanz Z1 der einen Schaltungseinrichtung SE1 sich vom Wert der Meßimpedanz Z2 der anderen Schaltungseinrichtung SE2 unterscheiden. In diesem Falle gilt für die Ausgangsimpedanz U2/I2' am Schnittstellenanschluß AS2:

$$U2/I2' = ZA1 \cdot Z2/Z1,$$

wobei ZA1 die zu transformierende Anschlußimpedanz am Schnittstellenanschluß AS1 ist.

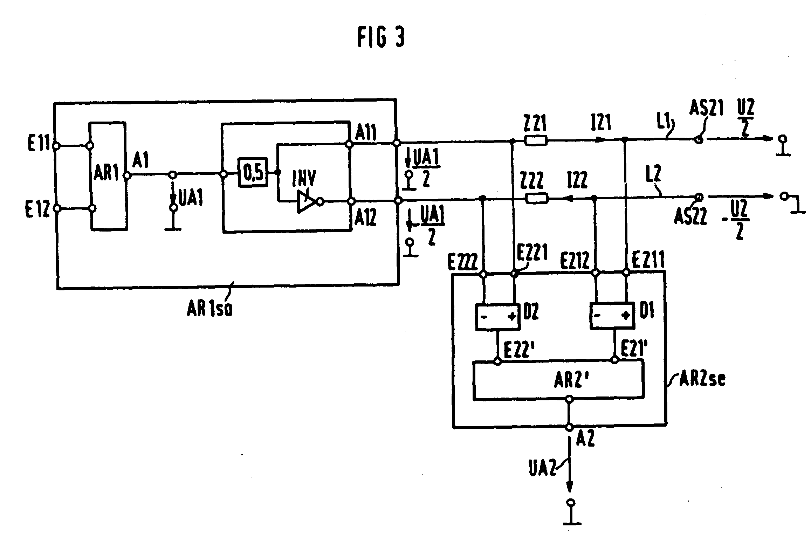

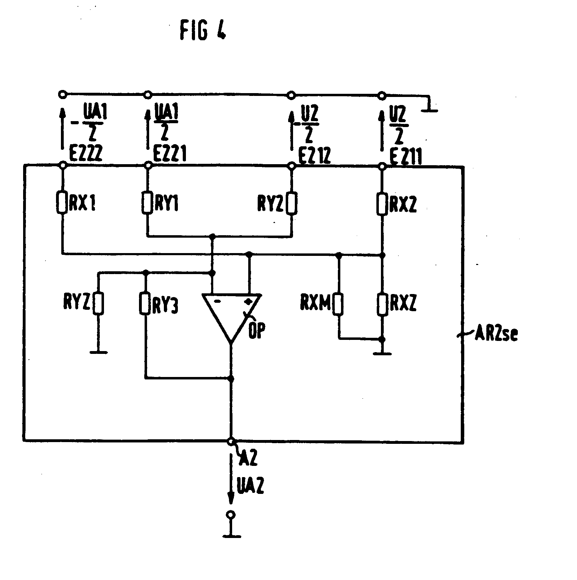

In der in Figur 1 gezeigten Schnittstellenschaltung IF können ggf. DC- oder Potential-Trennnstellen vorgesehen sein. Die Stellen, an denen in der Schaltungsanordnung nach Figur 1 solche Trennstufen eingebracht werden, sind jeweils durch den Anwendungsfall bedingt. Eine Teilnehmerschaltung, wie sie in Figur 3 gezeigt wird, wird normalerweise symmetrisch ausgeführt. Eine Potentialtrennung in Richtung Koppelfeld wird heute üblicherweise nicht mehr durchgeführt, der Speisestrom wird jedoch durch kapazitive Trennung vom Koppelfeld weggeschaltet. Bei einem unsymmetrischen Koppel feld muß die Schnittstellenanordnung also ein unsymmetrisches Signal in ein symmetrisches Signal umsetzen und es ist eine weitere Stufe zum Rückumsetzen eines symmetrischen Signales in ein unsymmetrisches Signal vorzusehen, wie sie beispielsweise in Figur 4 gezeigt wird.

Wird eine erfindungsgemäße Schnittstellenschaltung als Amtsleitungsanschaltung verwendet, so ist eine Potentialtrennung bzw. eine quasigalvanische Trennung erforderlich, um störende hohe Längswechselströme zu vermeiden. Da die Leitungsseite durch den Schleifenstrom ferngespeist wird, ist es zu empfehlen, in diesem Falle in einer Schnittstellenschaltung beide Analogrechnerschaltungen AR1 und AR2, soweit möglich, auf Anlagenpotential zu legen und den Operationsverstärker auf Leitungspotential. Eine Potentialtrennung erfolgt hierbei, gegebenenfalls durch hochohmige Differenzverstärker in anlagenseitiger Richtung vor dem ersten Eingang des leitungsseitigen Analogrechners sowie unmittelbar vor der leitungsseitigen Ausgangsimpedanz. In der Darstellung nach Figur 1 würde folglich bei einer Verwendung als Amtssatz eine Trennstufe zwischen dem die Meßimpedanz Z1 und den Schnittstellenanschluß AS1 verbindenden Schaltungsknoten und dem Steuereingang EII der Analogrechnerschaltung AR1 vorgesehen und eine weitere Trennstufe zwischen dem durch den Ausgang A2 der Schaltungseinrichtung SE2 und den Signaleingang E12 der Analogrechnerschaltung AR1 gebildeten Schaltungsknoten und dem anderen Anschluß der Meßimpedanz Z1 vorgesehen. Sind hierbei als Potentialtrennstufen Differenzverstärker mit hochohmigen Eingängen vorgesehen, so ist der erstgenannte dieser Differenzverstärker eingangsseitig mit dem Schnittstellenanschluß AS1 verbunden und ausgangsseitig mit dem Signaleingang E11 und der andendere Differenzverstärker ist eingangsseitig mit dem Ausgang A2 verbunden und ausgangsseitig mit der Meßimpedanz Z1. Wenn die Schaltung, wie in Bild 3 gezeigt, symmetriert und erdfrei ist, sind zur Erhaltung der Symmetrie Differenzverstärker zu verwenden.

Figur 2 zeigt ein Blockschaltbild und eine Grundschaltung einer in Figur 1 verwendeten Schaltungseinrichtung SE2 in sehr allgemeiner Form für unsymmetrische Strukturen. Diese Grundschaltung wird abhängig von der verwendeten Gesamtschaltung dimensioniert, wobei eine Dimensionierung von einzelnen Widerständen mit den Werten Null oder Unendlich eine anwendungsspezifische Schaltungsreduzierung erfolgt. Der Eingang E21 ist über einen Widerstand RP1 mit dem nichtinvertierenden Eingang eines Operationsverstärkers OP verbunden. Der Eingang E22 ist über einen Widerstand RN1 mit dem invertierenden Eingang dieses Operationsverstärkers verbunden. Der invertierende Eingang des Operationsverstärkers OP ist über einen Widerstand RN2 an den Ausgang des Operationsverstärkers geschaltet, der den Ausgang der Analogrechnerschaltung bildet. Um die Verstärkung der Eingänge E21 bzw. E22 einstellen zu können, kann der nichtinvertierende Eingang des Operationsverstärkers über einen Widerstand RPM gegen ein Bezugspotential geschaltet sein und der invertierende Eingang über einen Widerstand RNM gegen das Bezugspotential. Diese Widerstände sind für die Funktionsweise nicht unbedingt erforderlich. Die Notwendigkeit dieser Widerstände ist abhängig von dem Faktor k. Für die Spannung am Ausgang UA2 der Analogrechnerschaltung AR2 in Figur 2 gilt

$UA2 = k \cdot (U2 + I2 \cdot Z2)$

Bei Berücksichtigung des Vorzeichens nach Figur 2 gilt $I2 \cdot Z2 = U2 - UA1$. Gewünscht ist für die Ausgangsgröße am Ausgang A2 und daher

$UA2 = k \cdot (2 \cdot U2 - UA1)$. Die Schaltung nach Figur 2 erfüllt diese Bedingung in Abhängigkeit von der Größe des Faktors k unter anderem durch die Wahl der nachfolgenden Widerstandsverhältnisse.

Wenn für den Multiplikationsfaktor k gilt: $1 = k$, ergibt sich eine sehr einfache Lösung mit

$RN1 = RN2$, $RP1 = 0$ und $1/RPM = 1/RNM = 0$. Der Eingang E21 kann also unmittelbar mit dem nichtinvertierenden Eingang des OP verbunden werden, der invertierende Eingang des OP wird über gleichgroße Widerstände RN1 und RN2 mit dem Eingang E22 und dem Ausgang A2 verbunden und die Widerstände RPM und RNM gegen Bezugspotential sind nicht erforderlich.

Für einen Faktor k, der die Bedingung $0 < k < 1$ erfüllt, ist die Analogrechnerschaltung AR2 realisierbar durch die Widerstandsverhältnisse

$RN2 = k \cdot RN1$

$RP1 = ((1-k)/(2 \cdot k)) \cdot RPM$ und

$1/RNM = 0$.

Wenn der Multiplikationsfaktor k größer als eins ist, wird die Bedingung $UA2 = k \cdot (2 \cdot U2 - UA1)$ unter Verwendung folgender Widerstandsverhältnisse erfüllt:

$RN2 = k \cdot RN1$

$RNM = (k/(1-k)) \cdot RN1$

$RP1 = 0$

$1/RPM = 0$.

In diesem Fall ist also der nichtinvertierende Eingang des Operationsverstärkers nicht gegen Bezugspotential geschaltet und unmittelbar mit dem Eingang E21 verbunden.

Die Figur 3 zeigt einen Schnittstellenanschluß AS2, der zur Übertragung von symmetrischen Signalen in zwei Schnittstellenteilanschlüsse AS21 und AS22 aufgespalten ist. Der Schnittstellenteilanschluß AS21 ist mit einer Leitung L1 zur Führung des nichtinvertierten Signals verbunden und liefert eine Signalkomponente ½·U2. Der Schnittstellenteilanschluß AS22 ist mit der Leitung L2 für invertierte Signale verbunden und stellt die Signalkomponente- ½·U2 bereit. Die Differenz der Signalkomponente am Schnittstellenteilanschluß AS21 und der Signalkomponente am Schnittstellenteilanschluß AS22 ist folglich U2. In Figur 3 ist in Blockdarstellung eine Analogrechnerschaltung AR2se mit zwei symmetrischen Eingängen dargestellt. Der Schnittstellenteilanschluß AS21 ist mit dem einen nichtinvertierenden Eingang E211 der Analogrechnerschaltung AR2se verbunden und über eine Teil-Meßimpedanz Z21 mit dem anderen nichtinvertierenden Eingang E221 dieser Analogrechnerschaltung AR2se verbunden. In analoger Weise ist der Schnittstellenteilanschluß AS22 unmittelbar mit einem invertierenden Eingang E212 und über eine Teil-Meßimpedanz Z22 mit dem anderen invertierenden Eingang E222 der Analogrechnerschaltung AR2se verbunden. In Figur 3 ist die Meßimpedanz Z2 aus Symmetriegründen in zwei vorzugsweise gleich große Teil-Meßimpedanzen Z21 und Z22 aufgeteilt. In Abhängigkeit von der Gesamtschaltung kann jedoch bei nichtsymmetrischer Übertragung auch eine einzige Meßimpedanz Z21 verwendet werden.

Der mit der Teil-Meßimpedanz Z22 verbundene invertierende Eingang E222 ist mit dem Ausgang A12 für ein invertiertes Ausgangssignal -½·UA1 der Analogrechnerschaltung AR1sa verbunden. Diese Analogrechnerschaltung AR1sa hat einen Ausgang A11, A12 für ein symmetrisches Ausgangssignal. An dem Ausgang A12 wird das invertierte Ausgangssignal -½·UA1 bereitgestellt und an dem Ausgang A11 wird das nichtinvertierte Ausgangssignal ½·UA1 bereitgestellt. Diese können beispielsweise aus einer Ausgangsspannung UA1 mit Hilfe einer Symmetrierschaltung SC gebildet werden. Der Eingang dieser Symmetrierschaltung SC ist hierbei gegebenenfalls mit einem Ausgang A1 einer Analogrechnerschaltung AR1' verbunden, die den weiter oben beschriebenen Analogrechnerschaltungen AR1 entspricht. Das Signal am Ausgang A1 wird in der Symmetrierschaltung SC mit einem Faktor von 0,5 bewertet und an dem Ausgang A11 als nichtinvertiertes Signal ½·UA1 ausgegeben. Außerdem wird das Signal ½·UA1 mit Hilfe eines Invertierers INV invertiert und am Ausgang UA12 als invertiertes Signal -½·UA1 ausgegeben. Die Differenzspannung ist daher UA1.

In der Darstellung von Figur 3 wird mit Hilfe einer Differenzbildungschaltung D1 die Differenz zwischen dem Signal am Eingang E211 und dem Signal am Eingang E212 gebildet und an einen Eingang E21' eines Analogrechnerschaltungsteiles AR2' geschaltet. In analoger Weise wird die Differenz zwischen dem Signal am Eingang E221 und dem Signal am Eingang E222 der Analogrechnerschaltung AR2se mit Hilfe einer Differenzbildungschaltung D2 gebildet und an einen Eingang E22' des Analogrechnerschaltungsteiles AR2' geschaltet. Der Analogrechnerschaltungsteil AR2' kann hierbei durch Analogrechnerschaltungen realisiert sein, wie sie im weiter oben als Analogrechner AR2 beschrieben sind. Die Differenzbildung zwischen den an den Schnittstellenteilanschlüssen AS21 und AS22 anliegenden Signalteilen ist hierbei zur Erhaltung der Symmetrie erforderlich, da Ströme, die in gleicher Richtung in die Meßimpedanzen Z21 und Z22 fließen, kein Signal in der Rechenschaltung verursachen dürfen. Für die Signalkomponenten ½·UA1 und -½·UA1 gilt, daß diese zwar über die gleichgroßen Meßimpedanzen Z21 und Z22 an die Schnittstellenteilanschlüsse AS21 bzw. AS22 geschaltet sein müssen, daß das Signal am Eingang E22' des Analogrechnerschaltungsteiles AR2' jedoch von der Ausgangsgröße UA1 oder von einem der beiden Teilsignale ½·UA1 bzw. -½·UA1 hergeleitet sein kann, da zwischen diesen Spannungen ein starrer Zusammenhang besteht. Bei der Herleitung von dem Teilsignal ½·UA1 ist hierbei eine Verdoppelung des Signals vorzusehen, bei der Herleitung vom Teilsignal -½·UA1 ist außerdem das Vorzeichen zu berücksichtigen. Die Analogrechnerschaltungen AR2se und ARlsa nach Figur 3 führen zu dem gleichen Resultat wie die weiter oben beschriebenen Analogrechnerschaltungen.

Realisierungsformen für eine Analogrechnerschaltung AR2se mit symmetrischem Eingang werden in Figur 4 gezeigt. Hierbei stellt Figur 4 eine Standardrealisierungsform dar, bei der in Abhängigkeit von bestimmten Bedingungen die verwendeten Widerstände in bestimmtem Verhältnis zueinander stehen und hierbei einige Widerstände gegebenenfalls entfallen oder zu einzelnen Bauelementen zusammenfaßbar sind. Als Analogrechnerschaltung AR2 ist hier eine Subtrahiererschaltung dargestellt, wie sie unter anderem in Tietze/Schenk, Halbleiterschaltungstechnik, 5. Auflage 1980 im Kapitel 11.2 auf Seiten 190 - 194 dargestellt und erläutert ist.

Die in Figur 4 dargestellte Analogrechnerschaltung AR2se hat einen Eingang E222, der mit dem Signal -½·UA1 beaufschlagt ist, einen Eingang E221, der mit dem Signal ½·UA1 beaufschlagt ist, einen Eingang E212, der mit dem Signal -½·U2 beaufschlagt ist und einen Eingang E211, der mit dem Signal ½·U2 beaufschlagt ist. An dem Ausgang A2 wird das Ausgangssignal UA2 bereitgestellt. Der Ausgang A2 wird durch den Ausgang eines Operationsverstärkers OP gebildet. Der nichtinvertierende Eingang des Operationsverstärkers OP ist über einen Widerstand RX1 mit dem Eingang E222 verbunden, über einen Widerstand RX2 mit dem Eingang E211, über einen Widerstand RXM mit einem Bezugspotential und zusätzlich über einen Widerstand RXZ ebenfalls mit diesem Bezugspotential. Der invertierende Eingang des Operationsverstärkers OP ist über einen Widerstand RY3 mit dem Ausgang des Operationsverstärkers verbunden, über einen Widerstand RY1 mit dem Eingang E221, über einen Widerstand RY2 mit dem Eingang E212 und über einen Widerstand RYZ mit dem Bezugspotential. Wenn alle Eingänge E222, E221, E212 und E211 mit den obengenannten Signalen beaufschlagt sind, erhält man die Ausgangsspannung

$$UA2 = 2 \cdot k \cdot \tfrac{1}{2} \cdot U2 - 2 \cdot k \cdot (-\tfrac{1}{2} \cdot U2) - k \cdot \tfrac{1}{2} \cdot UA1 + k \cdot (-\tfrac{1}{2} \cdot UA1)$$

$$= k \cdot (2 \cdot U2 - UA1)$$

wenn folgende Widerstandsverhältnisse vorliegen

RX2 = RY2

RX1 = RY1 = 2·RY2

RXM = RY3 = 2·k·RY2 und

1/RXZ = 1/RYZ = 0.

Die Leitwerke 1/RXZ und 1/RYZ werden jeweils durch Weglassen eines Widerstandes realisiert.

Wenn am Eingang E222 kein Signal anliegt bzw. der nichtinvertierende Eingang des Operationsverstärkers OP nicht mit diesem Eingang E222 verbunden ist erhält man für die Ausgangsspannung

UA2 = 2·k·½·U2 - 2·k·(- ½·U2) - k·2·½·UA1 mit folgenden Widerstandsverhältnissen:

1/RX1 = 0

RX2 = RY1 = RY2 = RXZ

RY3 = RXM = 2·k·RY2

1/RYZ = 0.

Hierbei kann der Widerstand RXM mit dem Widerstand RXZ gemeinsam durch ein Bauelement realisiert sein. Der Leitwert 1/RYZ = 0 ist durch Weglassen eines Widerstandes zu realisieren, so daß die beschriebene Schaltung gegenüber der zuvor beschriebenen Schaltung mit weniger Bauelementen auskommt.

Analog gilt dann, wenn der Eingang E221 nicht mit einem Signal beaufschlagt ist bzw. der nichtinvertierende Eingang des Operationsverstärkers nicht mit dem Eingang E221 verbunden ist die Grundbedingung für die Ausgangsspannung

UA2 = k·2·U2 - k·UA1, wenn folgende Widerstandsverhältnisse vorliegen:

1/RY1 = 0

RX1 = RX2 = RY2 = RYZ

RY3 = RXM = 2·k·RY2

1/RXZ = 0.

Die Figur 3 und 4 zeigen eine einfache Realisierungsform von Schaltungseinrichtungen SE1 und SE2 für eine Schnittstellenanordnung IF. Selbstverständlich können die verwendeten Analogrechnerschaltungen auch mehrstufig aufgebaut werden, wobei gegebenenfalls eine Stufe die Differenzbildungen vornimmt eine andere Stufe einen Anteil des Multiplikationsfaktors liefert und eine weitere Stufe einen anderen Anteil des Multiplikationsfaktors liefert.

Die beschriebene Schnittstellenschaltung IF kann gleichspannungsentkoppelt ausgeführt sein, indem an entsprechender Stelle im Signalpfad eine kapazitive Koppelung vorgesehen ist.

## Patentansprüche

1.   Schnittstellenschaltung (IF) für Leitungsanschlüsse in Telekommunikationsanlagen, mit mindestens zwei Schnittstellenanschlüssen (AS1, AS2) und mit mindestens einer Schaltungseinrichtung (SE1, SE2) pro Schnittstellenanschluß (AS1, AS2), wobei eine Schaltungseinrichtung (SE1, SE2) jeweils den Strom (I2', I1') bzw. das Spannungssignal (U2, U1) eines zugeordneten Schnittstellenanschlusses (AS2, AS1) in Abhängigkeit von dem Strom (I1', I2') und dem Spannungssignal (U1, U2) an einem anderen Schnittstellenanschluß (AS1, AS2) derart regelt, daß Strom (I2', I1') und Spannungssignale (U2, U1) der einzelnen Schnittstellenanschlüsse (AS2, AS1) in vorgegebenem Verhältnis zueinander stehen, wobei jede Schaltungseinrichtung (SE1, SE2) eine Analogrechenschaltung (AR1, AR2) mit zwei Steuereingängen (E11, E12 bzw. E21, E22) und einem Ausgang mit geringer Ausgangsimpedanz aufweist,
   **dadurch gekennzeichet,**
   daß die beiden Steuereingänge (E11, E12 bzw. E21, E22) jeweils über eine Meßimpedanz (Z1, Z2) miteinander verbunden sind, daß jeweils mindestens einer der Steuereingänge (E11, E21) einer Schaltungseinrichtung (SE1, SE2) eine bezüglich der Meßimpedanz (Z1, Z2) hohe Eingangsimpedanz hat und mit einem Schnittstellenanschluß (AS1, AS2) verbunden ist, daß jeweils der andere Steuereingang (E12, E22) einer Schaltungseinrichtung (SE1, SE2) mit dem Ausgang (A2, A1) der anderen Schaltungseinrichtung (SE2, SE1) verbunden ist, wobei beide Steuereingänge (E12, E22) von jeweils einem steuereingangsindividuellen Signal angesteuert werden und daß die Analogrechenschaltungen (AR1, AR2) in geeigneter Weise aufgebaut sind, um an ihrem Ausgang (AR1, A2) jeweils ein Spannungssignal (UA1, UA2) bereitzustellen, das gleich der Summe aus dem Spannungssignal (U1, U2) an ihrem, mit dem Schnittstellenanschluß (AS1, AS2) verbundenen Steuereingang (E11, E21) und der Spannung I1·Z1, I2·Z2 zwischen den beiden Steuereingängen (E11, E12 bzw. E21, E22), jeweils multipliziert mit einem bestimmten Faktor, ist, wobei I1 bzw. I2 dem Strom durch die Meßimpedanz (Z1) bzw. (Z2) entspricht.

2.   Schnittstellenschaltung nach Anspruch 1,
   **dadurch gekennzeichnet,**
   daß zur Realisierung einer Spannungs-Pegeltransformation der Multiplikationsfaktor der einen Schaltungseinrichtung (SE2) dem Kehrwert des Multiplikationsfaktors der anderen Schaltungseinrichtung (SE1) entspricht.

3.   Schnittstellenschaltung nach einem der vorhergehenden Ansprüche,
   **dadurch gekennzeichnet,**
   daß die Multiplikationsfaktoren eins sind.

4.   Schnittstellenschaltung nach einem der vorhergehenden Ansprüche,
   **dadurch gekennzeichnet,**
   daß die Meßimpedanz (Z1) der einen Schaltungseinrichtung (SE1) gleich der Meßimpedanz (Z2) der anderen Schaltungseinrichtung (SE2) ist.

5.   Schnittstellenschaltung nach einem der vorhergehenden Ansprüche,
   **dadurch gekennzeichnet,**
   daß zur Realisierung einer Impedanztransformation der Wert der Meßimpedanz (Z1) der einen Schaltungseinrichtung (SE1) sich vom Wert der Meßimpedanz (Z2) der anderen Schaltungseinrichtung (SE2) unterscheidet.

**6.** Schnittstellenschaltung nach einem der vorhergehenden Ansprüche,
**dadurch gekennzeichnet,**
daß als Meßimpedanz (Z1, Z2) jeweils ein ohm'scher Widerstand vorgesehen ist.

**7.** Schnittstellenschaltung nach einem der vorhergehenden Ansprüche,
**dadurch gekennzeichnet,**
daß mindestens ein Schnittstellenanschluß (AS2) zum Übertragen symmetrischer Signale auf zwei Leitungen (L1, L2) vorgesehen ist, daß die entsprechende Meßimpedanz (Z2, Z1) durch jeweils eine Meßimpedanz (Z21, Z22) pro Leitung realisiert ist, deren Wert halb so groß ist, wie der gesamte, rechnerisch zu berücksichtigende Wert und daß die Analogrechnerschaltung (AR2) in geeigneter Weise aufgebaut ist und an die einander signalmäßig zugeordneten Anschlüsse (E211, E212, E221, E222) angeschlossen ist, um die Summe aus der Spannung [½·UA1 -[- ½·UA1]] und den Spannungswerten I21·Z21 und I22·Z22 zu bilden, wobei I21 bzw. I22 dem Strom durch die Meßimpedanz (Z21) bzw. (Z22) entspricht.

**8.** Schnittstellenschaltung nach einem der vorhergehenden Ansprüche,
**dadurch gekennzeichnet,**
daß mindestens eine Analogrechnerschaltung (AR1) einen symmetrischen Ausgang (A11, A12) hat.

**9.** Schnittstellenschaltung nach Anspruch 8,
**dadurch gekennzeichnet,**
daß zur Realisierung des symmetrischen Ausganges (A11, A12) an einem Teilausgang (A11) ein Teilsignal (½·UA1) bereitgestellt wird, das dem halben in der vorgeordneten Analogrechnerschaltung berücksichtigten unsymmetrischen Signalspannung (UA1) entspricht und daß an dem anderen Teilausgang (A12) das gleiche, jedoch mit Hilfe eines Invertierers (INV) invertierte Teilsignal ( -½·UA1) mit umgekehrtem Vorzeichen bereitgestellt wird.

**10.** Schnittstellenschaltung nach einem der vorhergehenden Ansprüche,
**dadurch gekennzeichnet,**
daß als Analogrechnerschaltung (AR1, AR2) eine Subtrahiererschaltung vorgesehen ist.

**11.** Schnittstellenschaltung nach Anspruch 10,
**dadurch gekennzeichnet,**
daß die Eingänge der Subtrahiererschaltung unterschiedlich gewichtet sind.

**12.** Schnittstellenschaltung nach Anspruch 11,
**dadurch gekennzeichnet,**
daß der Eingang des Minuenden bezüglich des Einganges des Subtrahenden mit dem Faktor zwei gewichtet ist.

**13.** Schnittstellenschaltung nach einem der vorhergehenden Ansprüche,
**dadurch gekennzeichnet,**
daß mindestens eine Analogrechnerschaltung (AR2) zwei Eingänge (E21, E22) mit je zwei Eingangsanschlüssen (E211, E221, E212, E222) für symmetrische Signale hat und daß zur Realisierung der Analogrechnerschaltung (AR2) eine Subtrahiererschaltung mit zwei invertierenden und zwei nichtinvertierenden Eingängen vorgesehen ist.

**14.** Schnittstellenschaltung nach Anspruch 13,
**dadurch gekennzeichnet,**
daß der Anschluß (E211) der einen Teilimpedanz (Z21), der mit dem zugeordneten Schnittstellenteilanschluß (AS21) für das nichtinvertierte Teilsignal (½·U2) verbunden ist, mit einem ersten, nicht invertierenden Eingang der Subtrahiererschaltung verbunden ist, daß der andere Anschluß dieser Teilimpedanz (Z21) mit einem bezüglich des ersten nichtinvertierenden Einganges mit Faktor zwei gewichteten nichtinvertierenden Eingang der Subtrahiererschaltung verbunden ist, und daß zwei invertierende Eingänge (E212, E222) in analoger Weise mit den Anschlüssen der anderen Teilimpedanz (Z22) verbunden sind.

**15.** Schnittstellenschaltung nach Anspruch 13,
**dadurch gekennzeichnet,**
daß die beiden invertierenden (E222,E212) und die beiden nichtinvertierenden Eingänge (E211, E221) der Subtrahiererschaltung die gleiche Gewichtung haben, daß ein invertierender Eingang mit dem Schnittstellenanschluß (AS21) für nichtinvertierte Teilsignale (½·U2) verbunden ist, daß ein invertierender Eingang mit dem Schnittstellenanschluß (AS22) für invertierte Teilsignale (- ½U2) verbunden ist, daß der Teilsignalausgang (A11) für das nichtinvertierte Ausgangssignal (½·UA1) der anderen Analogrechnerschaltung (AR1) mit dem weiteren nicht invertierenden Eingang (E221) der Subtrahiererschaltung verbunden ist und der weitere invertierende Eingang (E222) der Subtrahiererschaltung mit Bezugspotential verbunden ist.

**16.** Schnittstellenschaltung nach Anspruch 13,
**dadurch gekennzeichnet,**
daß die beiden invertierenden (E222,E212) und die beiden nichtinvertierenden Eingänge (E211, E221) der Subtrahiererschaltung die gleiche Gewichtung haben, daß ein invertierender Eingang mit dem Schnittstellenanschluß (AS21) für nichtinvertierte Teilsignale (½·U2) verbunden ist, daß ein invertierender Eingang mit dem Schnittstellenanschluß (AS22) für invertierte Teilsignale (- ½·U2) verbunden ist, daß der Teilsignalausgang (A12) für das invertierte Ausgangssignal (- ½·UA1) der anderen Analogrechnerschaltung (AR1) mit dem weiteren invertierenden Eingang (E222) der Subtrahiererschaltung verbunden ist und der weitere nicht invertierende Eingang (E221) der Subtrahiererschaltung mit Bezugspotential verbunden ist.

**17.** Schnittstellenschaltung nach einem der vorhergehenden Ansprüche,
**dadurch gekennzeichnet,**
daß mindestens ein Schnittstellenanschluß (AS1, AS2) durch mindestens eine Kapazität im Signalpfad gleichspannungsentkoppelt ausgeführt ist.

**Claims**

1. Interface circuit (IF) for line terminals in telecommunications systems, having at least two interface terminals (AS1, AS2) and having at least one circuit device (SE1, SE2) per interface terminal (AS1, AS2), in which a circuit device (SE1, SE2) in each instance controls the current (I2', I1') or the voltage signal (U2, U1) of an associated interface terminal (AS2, AS1) as a function of the current (I1', I2') and the voltage signal (U1, U2) at another interface terminal (AS1, AS2) in such a manner that current (I2', I1') and voltage signals (U2, U1) of the individual interface terminals (AS2, AS1) are in a prescribed relationship to one another, each circuit device (SE1, SE2) having an analog computer circuit (AR1, AR2) with two control inputs (E11, E12 and E21, E22, respectively) and an output of low output impedance, characterized in that the two control inputs (E11, E12 and E21, E22, respectively) are connected to one another in each instance via a test impedance (Z1, Z2), in that in each instance at least one of the control inputs (E11, E21) of a circuit device (SE1, SE2) has an input impedance which is high as compared with the test impedance (Z1, Z2) and is connected to an interface terminal (AS1, AS2), in that in each instance the other control input (E12, E22) of a circuit device (SE1, SE2) is connected to the output (A2, A1) of the other circuit device (SE2, SE1), the two control inputs (E12, E22) being activated by a respective signal individual to that control input, and in that the analog computer circuits (AR1, AR2) are constructed in a suitable manner to make available at their output (A1, A2) in each instance a voltage signal (UA1, UA2) which is equal to the sum of the voltage signal (U1, U2) at their control input (E11, E21) connected to the interface terminal (AS1, AS2) and the voltage I1·Z1, I2·Z2 between the two control inputs (E11, E12 and E21, E22, respectively), in each instance multiplied by a specified factor, I1 and I2 corresponding to the current through the text impedance (Z1) and (Z2), respectively.

2. Interface circuit according to Claim 1, characterized in that to realize a voltage level transformation the multiplication factor of the one circuit device (SE2) corresponds to the reciprocal of the multiplication factor of the other circuit device (SE1).

3. Interface circuit according to one of the preceding claims, characterized in that the multiplication factors are one.

4. Interface circuit according to one of the preceding claims, characterized in that the test impedance (Z1) of the one circuit device (SE1) is equal to the test impedance (Z2) of the other circuit device (SE2).

5. Interface circuit according to one of the preceding claims, characterized in that to realize an impedance transformation the value of the test impedance (Z1) of the one circuit device (SE1) differs from the value of the test impedance (Z2) of the other circuit device (SE2) .

6. Interface circuit according to one of the preceding claims, characterized in that in each instance an ohmic resistor is provided as test impedance (Z1, Z2).

7. Interface circuit according to one of the preceding claims , characterized in that at least one interface terminal (AS2) for the transmission of symmetric signals on two lines (L1, L2) is provided, in that the corresponding test impedance (Z2, Z1) is realized by in each instance one test impedance (Z21, Z22) per line, the value of which is half as great as the total value to be considered arithmetically, and in that the analog computer circuit (AR2) is constructed and is connected to the terminals (E211, E212, E221, E222), associated with one another according to signals, in a suitable manner to form the sum of the voltage [½·UA1 - [- ½·UA1]] and the voltage values I21·Z21 and I22·Z22, I21 and I22 corresponding to the current through the text impedance (Z21) and (222), respectively.

8. Interface circuit according to one of the preceding claims, characterized in that at least one analog computer circuit (AR1) has a symmetric output (A11, A12).

9. Interface circuit according to Claim 8, characterized in that to realize the symmetric output (A11, A12) at a partial output (A11) a partial signal (½·UA1) is made available, which corresponds to half of the asymmetric signal voltage (UA1) considered in the upstream analog computer circuit, and in, that at the other partial output (A12) the same partial signal (- ½·UA1), which is however inverted with the aid of an inverter (INV), is made available, with reversed sign.

10. Interface circuit according to one of the preceding claims, characterized in that a subtractor circuit is provided as analog computer circuit (AR1, AR2).

11. Interface circuit according to Claim 10, characterized in that the inputs of the subtractor circuit are differently weighted.

12. Interface circuit according to Claim 11, characterized in that the input of the minuend is weighted by the factor two with respect to the input of the subtrahend.

13. Interface circuit according to one of the preceding claims, characterized in that at least one analog computer circuit (AR2) has two inputs (E21, E22) with in each case two input terminals (E211, E221, E212, E222) for symmetric signals, and in that to realize the analog computer circuit (AR2) a subtractor circuit with two inverting and two non-inverting inputs is provided.

14. Interface circuit according to Claim 13, characterized in that the terminal (E211) of the one partial impedance (Z21), which is connected to the associated interface partial terminal (AS21) for the non-inverted partial signal (½·U2), is connected to a first, non-inverting input of the subtractor circuit, in that the other terminal of this partial impedance (Z21) is connected to a non-averting input of the subtractor circuit which is weighted by the factor two with respect to the first non-inverting input, and in that two inverting inputs (E212, E222) are connected in a similar manner to the terminals of the other partial impedance (Z22).

15. Interface circuit according to Claim 13, characterized in that the two inverting (E222, E212) and the two non-inverting inputs (E211, E221) of the subtractor circuit have the same weighting, in that an inverting input is connected to the interface terminal (AS21) for non-inverted partial signals (½·U2), in that an inverting input is connected to the interface terminal (AS22) for inverted partial signals (- ½·U2), in that the partial signal output (A11) for the non-inverted output signal (½·UA1) of the other analog computer circuit (AR1) is connected to the further non-inverting input (E221) of the subtractor circuit, and the further inverting input (E222) of the subtractor circuit is connected to reference potential.

16. Interface circuit according to Claim 13, characterized in that the two inverting (E222, E212) and the two non-inverting inputs (E211, E221) of the subtractor circuit have the same weighting, in that an inverting input is connected to the interface terminal (AS21) for non-inverted partial signals (½·U2), in that an inverting input is connected to the interface terminal (AS22) for inverted partial signals (- ½·U2), in that the partial signal output (A12) for the inverted output signal (- ½·UA1) of the other analog computer circuit (AR1) is connected to the further inverting input (E222) of the subtractor circuit, and the further non-inverting input (E221) of the subtractor circuit is connected to reference potential.

17. Interface circuit according to one of the preceding claims, characterized in that at least one interface terminal (AS1, AS2) is formed in a manner decoupled from direct voltage by at least one capacitance in the signal path.

**Revendications**

1. Circuit d'interface (IF) pour des raccordements de lignes dans des installations de télécommunication, comportant au moins deux raccordements d'interface (AS1, AS2) et au moins un dispositif de branchement (SE1, SE2) par raccordement d'interface (AS1, AS2), un dispositif de branchement (SE1, SE2) réglant à chaque fois le courant (I2', I1') ou le signal de tension (U2, U1) d'un raccordement d'interface associé (AS2, AS1) en fonction du courant (I1', I2') et du signal de tension (U1, U2) à un autre raccordement d'interface (AS1, AS2) de telle sorte que les courants (I2', I1') et les signaux de tension (U2, U1) des raccordements d'interface individuels (AS2, AS1) se trouvent dans un rapport prédéterminé, chaque dispositif de branchement (SE1, SE2) comportant un circuit calculateur analogique (AR1, AR2) avec deux entrées de commande (E11, E12 ou E21, E22) et avec une sortie à petite impédance de sortie,
   caractérisé par le fait que
   les deux entrées de commande (E11, E12 ou E21, E22) sont reliées à chaque fois ensemble par l'intermédiaire d'une impédance série (Z1, Z2), à chaque fois, au moins l'une des entrées de commande (E11, E21) d'un dispositif de branchement (SE1, SE2) a une impédance d'entrée élevée par rapport à l'impédance série (Z1, Z2) et est reliée à un raccordement d'interface (AS1, AS2), à chaque fois, l'autre entrée de commande (E12, E22) d'un dispositif de branchement (SE1, SE2) est reliée à la sortie (A2, A1) de l'autre dispositif de branchement (SE2, SE1), les deux entrées de commande (E12, E22) étant commandées à chaque fois par un signal spécifique à l'entrée de commande, et les circuits calculateurs analogiques (AR1, AR2) ont une structure appropriée pour fournir à leur sortie (A1, A2) à chaque fois un signal de tension (UA1, UA2) qui est égal à la somme du signal de tension (U1, U2) à leur entrée de commande (E11, E21) reliée au raccordement d'interface (AS1, AS2) et de la tension $I1 \cdot Z1$, $I2 \cdot Z2$ entre les deux entrées de commande (E11, E12 ou E21, E22), multipliée à chaque fois par un certain facteur, I1 et I2 correspondant aux courants respectifs à travers les impédances série (Z1) et (Z2).

2. Circuit d'interface selon la revendication 1,
   caractérisé par le fait que,
   pour la mise en oeuvre d'une transformation de niveau de tension, le facteur de multiplication de l'un des dispositifs de branchement (SE2) correspond à la valeur inverse du facteur de multiplication de l'autre dispositif de branchement (SE1).

3. Circuit d'interface selon l'une des revendications précédentes,
   caractérisé par le fait que
   les facteurs de multiplication sont égaux à 1.

4. Circuit d'interface selon l'une des revendications précédentes,
   caractérisé par le fait que
   l'impédance série (Z1) de l'un des dispositifs de branchement (SE1) est égale à l'impédance série (Z2) de l'autre dispositif de branchement (SE2).

5. Circuit d'interface selon l'une des revendications précédentes,
   caractérisé par le fait que,
   pour la mise en oeuvre d'une transformation d'impédance, la valeur de l'impédance série (Z1) de l'un des dispositifs de branchement (SE1) est différente de la valeur de l'impédance série (Z2) de l'autre dispositif de branchement (SE2).

6. Circuit d'interface selon l'une des revendications précédentes,
   caractérisé par le fait
   qu'il est prévu comme impédance série (Z1, Z2) à chaque fois une résistance ohmique.

7. Circuit d'interface selon l'une des revendications précédentes,
   caractérisé par le fait
   qu'au moins un raccordement d'interface (AS2) est prévu pour la transmission de signaux symétriques sur deux lignes (L1, L2), l'impédance série correspondante (Z2, Z1) est mise en oeuvre par à chaque fois une impédance série (Z21, Z22) par ligne dont la valeur est la moitié de la valeur totale à prendre en compte lors du calcul, et le circuit calculateur analogique (AR2) a une structure appropriée et est raccordé aux bornes (E211, E212, E221, E222), associées les unes aux autres quant aux signaux, afin de former la somme de la tension $[\frac{1}{2} \cdot UA1 - [- \frac{1}{2} \cdot UA1]]$ et des valeurs de tensions $I21 \cdot Z21$ et $I22 \cdot Z22$, I21 et I22 correspondant aux courants respectifs à travers les impédances série (Z21) et (Z22).

**8.** Circuit d'interface selon l'une des revendications précédentes,
caractérisé par le fait
qu'au moins un circuit calculateur analogique (AR1) a une sortie symétrique (A11, A12).

**9.** Circuit d'interface selon la revendication 8,
caractérisé par le fait que,
pour la mise en oeuvre de la sortie symétrique (A11, A12), il est fourni à une sortie partielle (A11) un signal partiel (½·UA1), qui correspond à la moitié de la tension de signal non symétrique (UA1) prise en compte dans le circuit calculateur analogique placé en amont, et il est fourni à l'autre sortie partielle (A12) le même signal partiel mais de signe inverse (- ½·UA1), l'inversion étant effectuée à l'aide d'un inverseur (INV).

**10.** Circuit d'interface selon l'une des revendications précédentes,
caractérisé par le fait que
il est prévu comme circuit calculateur analogique (AR1, AR2) un circuit soustracteur.

**11.** Circuit d'interface selon la revendication 10,
caractérisé par le fait que
les entrées du circuit soustracteur ont des pondérations différentes.

**12.** Circuit d'interface selon la revendication 11,
caractérisé par le fait que
l'entrée du terme dont on soustrait est pondérée avec le facteur 2 par rapport à l'entrée du terme à soustraire.

**13.** Circuit d'interface selon l'une des revendications précédentes,
caractérisé par le fait que
au moins un circuit calculateur analogique (AR2) a deux entrées (E21, E22) avec à chaque fois deux bornes d'entrée (E211, E221, E212, E222) pour des signaux symétriques et, pour la mise en oeuvre du circuit calculateur analogique (AR2), il est prévu un circuit soustracteur avec deux entrées inverseuses et avec deux entrées non inverseuses.

**14.** Circuit d'interface selon la revendication 13,
caractérisé par le fait que
la borne (E211) de l'une des impédances partielles (Z21), qui est reliée au raccordement partiel d'interface associé (AS21) pour le signal partiel non inversé (½·U2), est reliée à une première entrée non inverseuse du circuit soustracteur, l'autre borne de cette impédance partielle (Z21) est reliée à une entrée non inverseuse du circuit soustracteur qui est pondérée avec un facteur 2 par rapport à la première entrée non inverseuse et deux entrées inverseuses (E212, E222) sont reliées de manière analogue aux bornes de l'autre impédance partielle (Z22).

**15.** Circuit d'interface selon la revendication 13,
caractérisé par le fait que
les deux entrées inverseuses (E222, E212) et les deux entrées non inverseuses (E211, E221) du circuit soustracteur ont la même pondération, une entrée inverseuse est reliée au raccordement d'interface (AS21) pour des signaux partiels non inversés (½·U2), une entrée inverseuse est reliée au raccordement d'interface (AS22) pour des signaux partiels inversés (- ½·U2), la sortie de signal partiel (A11) pour le signal de sortie non inversé (½·UA1) de l'autre circuit calculateur analogique (AR1) est reliée à l'autre entrée non inverseuse (E221) du circuit soustracteur et l'autre entrée inverseuse (E222) du circuit soustracteur est reliée au potentiel de référence.

**16.** Circuit d'interface selon la revendication 13,
caractérisé par le fait que
les deux entrées inverseuses (E222, E212) et les deux entrées non inverseuses (E211, E221) du circuit soustracteur ont la même pondération, une entrée inverseuse est reliée au raccordement d'interface (AS21) pour des signaux partiels non inversés (½·U2), une entrée inverseuse est reliée au raccordement d'interface (AS22) pour des signaux partiels inversés (- ½·U2), la sortie de signal partiel (A12) pour le signal de sortie inversé (- ½·UA1) de l'autre circuit calculateur analogique (AR1) est reliée à l'autre entrée inverseuse (E222) du circuit soustracteur et l'autre entrée non inverseuse (E221) du circuit soustracteur est reliée au potentiel de référence.

**17.** Circuit d'interface selon l'une des revendications précédentes,
caractérisé par le fait

qu'au moins un raccordement d'interface (AS1, AS2) est mis en oeuvre avec un découplage de tension continue par au moins une capacité dans le trajet des signaux.

## FIG 1

## FIG 2

FIG 3

## FIG 4